# EUROPÄISCHE PATENTSCHRIFT

(11) **EP 0 462 399 B1**
(45) Veröffentlichungstag und Bekanntmachung des Hinweises auf die Patenterteilung: **18.11.1993**
(21) Anmeldenummer: 91107908.5
(22) Anmeldetag: 16.05.1991
(51) Int. Cl.: B60G 3/24, B60G 3/26

(54) **Radaufhängung**
Wheel suspension
Suspension de roue

(30) Priorität: 21.06.1990 DE 4019761
(43) Veröffentlichungstag der Anmeldung: 27.12.1991
(73) Patentinhaber: Dr.Ing.h.c. F. Porsche Aktiengesellschaft, 70435 Stuttgart (DE)
(72) Erfinder: Luger, Martin, W-7250 Leonberg (DE); Lechner, Reinhard, CH-Rapperswil (CH)

(56) Entgegenhaltungen:
- EP-A- 0 202 449
- DE-A- 1 630 370
- DE-C- 967 921
- FR-A- 2 333 658

## Beschreibung

Die Erfindung bezieht sich auf eine Radaufhängung nach dem Oberbegriff des Anspruchs 1. Eine derartige Radaufhängung ist z.B. aus der EP-A-0 202 449 bekannt.

Bei Radaufhängungen für Kraftfahrzeuge erfolgt bei Federungsbewegungen eine Radstellungsänderung, wie z.B. eine Sturzänderung oder eine Vorspur- bzw. Nachspurverstellung, die nicht immer erwünscht ist, da das Fahrverhalten hierdurch nachteilig beeinflußt werden kann.

Aufgabe der Erfindung ist es, eine verbesserte Radaufhängung zu schaffen, die bei Federungsvorgängen weitestgehend eine das Fahrverhalten nachteilig beeinflussende Radstellungsänderung unterbindet.

Diese Aufgabe wird erfindungsgemäß durch die kennzeichnenden Merkmale gelöst. Weitere vorteilhafte Merkmale beinhalten die Unteransprüche.

Die mit der Erfindung hauptsächlich erzielten Vorteile bestehen darin, daß durch die Anbindung des Radführungslenkers am Radträger über Koppelvierecke bildende Brückenglieder bei Federungsbewegungen des Rades im wesentlichen nur eine Spurweitenänderung des Rades erfolgen kann. Eine Sturzänderung sowie eine Vor- oder Nachspurverstellung wird weitestgehend ausgeschlossen bzw. ist vernachlässigbar.

Hierzu sind die Brückenglieder zur senkrechten Radmittenlängsebene unter einem Winkel angestellt, so daß sich etwa in der Höhe der Radaufstandsfläche und annähernd in der senkrechten Längsmittenebene des Rades eine Schnittkante zwischen den die Brückenglieder aufnehmenden gedachten Längsebenen bilden.

Die Erfindung ist für alle Arten von Radaufhängungen anwendbar, wie für Längslenker-, Querlenker- und Schräglenkerachsen. Eine Anstellung der Brückenglieder kann entsprechend den Erfordernissen der Radverstellung erfolgen, so daß die Schnittkante auch oberhalb oder unterhalb der Radaufstandsebene liegen kann.

Wesentlich nach der Erfindung ist, daß durch die zwischengeschalteten Brückenglieder bei Federungsvorgängen das Rad immer senkrecht zur Fahrbahn steht.

Ein Ausführungsbeispiel der Erfindung ist in der Zeichnung dargestellt und wird im folgenden näher beschrieben.

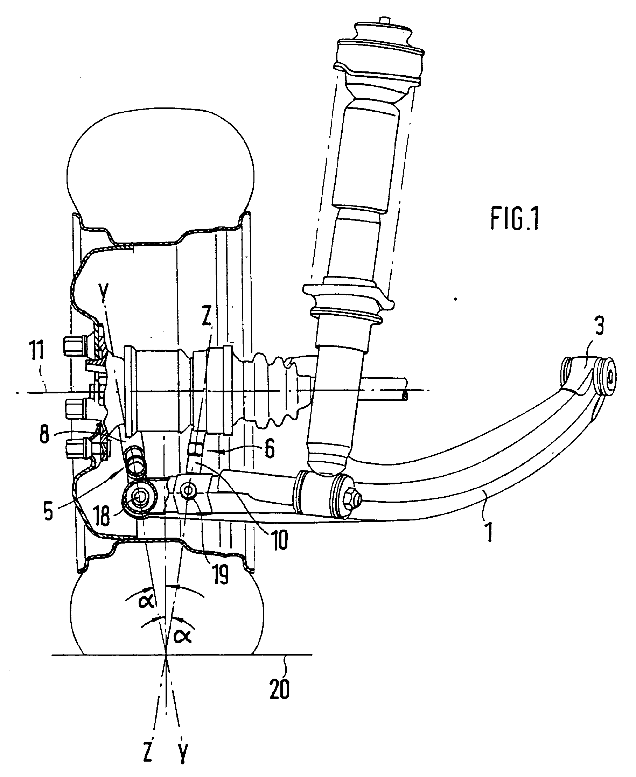

Es zeigen
- Fig. 1: eine Vorderansicht einer Radaufhängung mit zwischengeschalteten Brückengliedern,
- Fig. 2: eine Seitenansicht der Radaufhängung gemäß Fig. 1, wobei jedes Brückenglied nur zur Hälfte dargestellt ist, und

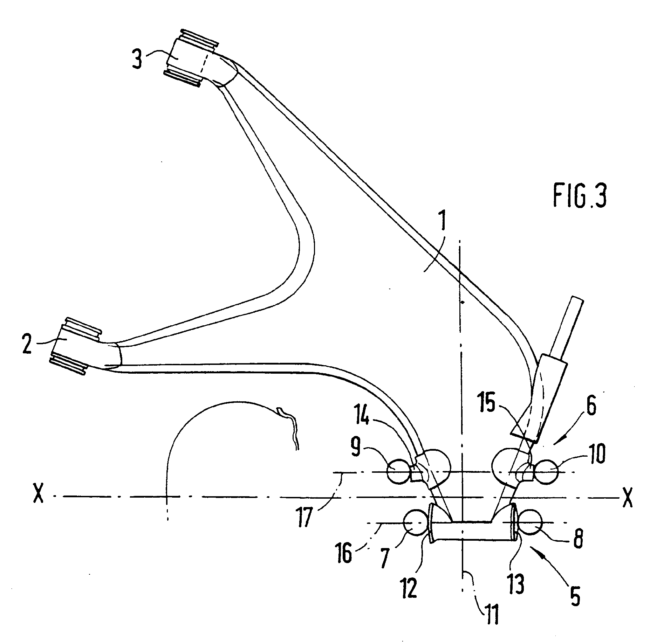

- Fig. 3: eine Draufsicht der Radaufhängung gemäß der Fig. 1 und 2.

Die Radaufhängung umfasst im wesentlichen ein Radführungslenker 1, der am Fahrzeugaufbau über Schwenklager 2 und 3 gelagert ist und am Radträger 4 unter Zwischenschaltung von Brückengliedern 5 und 6 verschwenkbar abgestützt wird, die jeweils Koppelvierecke bilden.

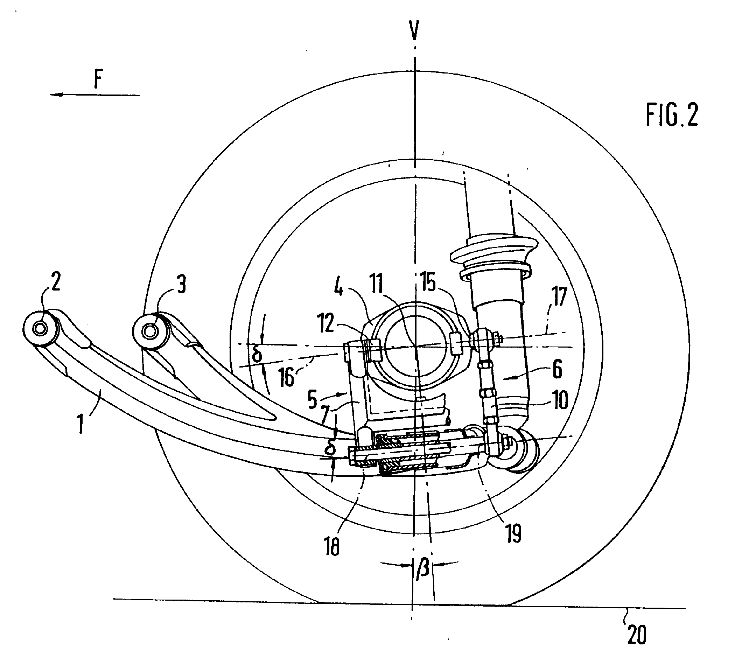

Jedes Brückenglied 5 und 6 weist Zwischenlenker 7, 8 und 9, 10 auf, die zu beiden Seiten einer Raddrehachse 11, wie Fig. 2 näher zeigt, angeordnet sind. Sie sind am Radträger 4 in Lagern 12, 13 und 14, 15 gelagert, die jeweils eine Schwenkachse 16 und 17 bilden. Die diesen Lagern abgekehrten freien Enden der Zwischenlenker 7, 8 und 9, 10 sind auf einer Achse 18, 19 schwenkbar gehalten, die mit dem Lenker 1 verbunden sind.

Die Brückenglieder 5, 6 sind zu beiden Seiten der senkrechten Radmittenlängsebene X-X angeordnet und unter einem Winkel α zu dieser Ebene X-X derart angestellt, daß die durch die Brückenglieder 5, 6 verlaufenden gedachten Ebenen Y-Y und Z-Z sich in Höhe der Radaufstandsfläche 18 und in der Radmittenlängsebene X-X schneiden.

Wie Fig. 2 näher zeigt, sind die Zwischenlenker 7, 8 und 9, 10 der Brückenglieder 5, 6 parallel liegend zueinander und in den Längsebenen Y-Y und Z-Z angeordnet und die Achsen 16, 17 erstrecken sich rechtwinkelig dazu. Diese Achsen 18, 19 sowie die Schwenkachsen 16, 17 sind parallel zu der senkrechten Längsmittenebene X-X des Rades angeordnet, wobei die Achsen 16 und 18 des Brückengliedes 5 - in bezug auf die die Längsachse des Fahrzeugs - außerhalb der Radmittenlängsebene X-X und die Achsen 17 und 19 innerhalb der senkrechten Radmittenlängsebene X-X angeordnet sind.

Die Brückenglieder 5, 6 stehen unter einem spitzen Winkel ß zu einer senkrechten Quermittenebene V-V des Rades, wodurch ein Nachlaufwinkel erzielt wird. Bei dieser Anordnung der Brückenglieder 5, 6 sind die Schwenkachsen 16, 17 am Radträger 4 sowie die Schwenkachsen 17, 18 am Radführungslenker 1 unter einem Winkel δ zu einer horizontalen Ebene angestellt. Insbesondere sind die Schwenkachsen 16, 17 am Radträger 4 so angeordnet, daß die die Lager aufnehmende gedachte Ebene durch die Raddrehachse 11 verläuft.

## Patentansprüche

1. Radaufhängung für ein Kraftfahrzeug zur Beeinflussung einer Radbewegung bei Federungsvorgängen mittels eines zwangsgeführten Radführungslenkers (1), der am Fahrzeugaufbau um eine von Lenkerlagern (2, 3) gebildete Achse schwenkbar und über Lager am Radträger (4) gelenkig abgestützt ist, wobei Radträger (4) ein Feder- und/oder Dämpferbein gehalten wird, **dadurch gekennzeichnet,** daß der Radführungslenker (1) über Brückenglieder (5, 6) am Radträger (4) angelenkt ist, die zusammen mit dem Radträger (4) und Radführungslenker (1) Koppelvierecke bilden und zueinander unter einem Winkel (α) zu einer senkrechten Radmittenlängsebene (X-X) angestellt sind und daß durch die Brückenglieder (5, 6) gelegte Längsebenen (Z-Z), (Y-Y) sich etwa in der senkrechten Längsmittenebene (X-X) und etwa in Höhe der Radaufstandsfläche (18) schneiden.

2. Radaufhängung nach Anspruch 1, **dadurch gekennzeichnet**, daß die Brückenglieder (5, 6) jeweils zwei sich etwa vertikal zu beiden Seiten einer Raddrehachse (11) erstreckende Zwischenlenker (7, 8 und 9, 10) umfassen, die einerseits in Lagern (12, 13 und 14, 15) am Radträger (4) um Achsen (16, 17) schwenkbar gehalten sind und andererseits über in Fahrzeuglängsrichtung verlaufende Achsen (18 und 19) mit dem Radführungslenker (1) verbunden sind.

3. Radaufhängung nach den Ansprüchen 1 oder 2, **dadurch gekennzeichnet**, daß die Brückenglieder (5, 6) zu beiden Seiten der senkrechten Längsmittenebene (X-X) des Rades angeordnet sind.

4. Radaufhängung nach einem oder mehreren der vorhergehenden Ansprüche, **dadurch gekennzeichnet**, daß die Schwenkachsen (16, 17) der Brückenglieder (5, 6) am Radträger (4) und im Radführungslenker (1) jeweils in parallelen Ebenen zur senkrechten Längsmittenebene (X-X) angeordnet sind.

5. Radaufhängung nach einem oder mehreren der vorhergehenden Ansprüche, **dadurch gekennzeichnet**, daß die Zwischenhebel (7, 8 und 9, 10) der beiden Brückenglieder (5, 6) in der Längsebene (Z-Z und Y-Y) parallel zueinander angeordnet sind.

6. Radaufhängung nach einem oder mehreren der vorhergehenden Ansprüche, **dadurch gekennzeichnet**, daß die Brückenglieder (5, 6) unter einem spitzen Winkel (ß) zu einer senkrechten Quermittenebene (V-V) des Rades angestellt sind und die Schwenkachsen (16, 17) am Radträger (4) und die Schwenkachsen (18, 19) am Radführungslenker (1) schräg in Fahrtrichtung (F) unter einem Winkel (δ) verlaufen.

## Claims

1. A wheel suspension for a motor vehicle, to influence wheel movement during springing operations by means of a constrained wheel-guide suspension arm (1) supported on the vehicle frame so as to be pivotable about an axis formed by suspension arm bearings (2, 3) and supported in an articulated manner via bearings on the wheel support (4), wherein a resilient and/or damping leg is retained on the wheel support (4), **characterised in that** the wheel-guide suspension arm (1) is articulated on the wheel support (4) via bridge members (5, 6) which, together with the wheel support (4) and the wheel-guide suspension arm (1), form coupling quadrilaterals, and are arranged facing one another at an angle (α) to a vertical median longitudinal plane (X-X) of the wheel, and longitudinal planes (Z-Z), (Y-Y), positioned through the bridge members (5, 6), intersect substantially in the vertical longitudinal median plane (X-X) and substantially at the height of the wheel contact surface (18).

2. A wheel suspension in accordance with claim 1, **characterised in** **that** the bridge members (5, 6) each include two intermediate suspension arms (7, 8, and 9, 10), extending approximately vertically to both sides of a wheel turning axis (11), the intermediate suspension arms being, on the one hand, retained in bearings (12, 13, and 14, 15) on the wheel support (4) so as to be pivotable about axes (16,17), and, on the other hand, connected to the wheel-guide suspension arm (1) by means of shafts (18 and 19) extending in the longitudinal direction of the vehicle.

3. A wheel suspension in accordance with claim 1 or 2, **characterised** **in that** the bridge members (5, 6) are arranged at both sides of the vertical longitudinal median plane (X-X) of the wheel.

4. A wheel suspension in accordance with one or more of the preceding claims, **characterised in that** the pivoting axes (16, 17) for the bridge members (5, 6) are arranged on the wheel support (4) and in the wheel-guide suspension arm (1), in respective planes parallel to the vertical longitudinal median plane (X-X).

5. A wheel suspension in accordance with one or more of the preceding claims, **characterised in that** the intermediate levers (7, 8, and 9, 10) of the two bridge members (5, 6) are arranged in parallel to one another in the longitudinal plane (Z-Z and Y-Y).

6. A wheel suspension in accordance with one or more of the preceding claims, **characterised in that** the bridge members (5, 6) are positioned at a sharp angle (β) to a vertical transverse median plane (V-V) of the wheel, and the pivoting axes (16, 17) on the wheel support (4), and the pivoting shafts (18, 19) on the wheel-guide suspension arm (1) extend in the direction of travel (F) at an angle (δ).

## Revendications

1. Suspension de roue pour un véhicule automobile destinée à influencer le mouvement d'une roue lors des déplacements d'amortissement au moyen d'un bras oscillant de guidage de roue (1) guidé forcé, qui peut pivoter sur la carrosserie du véhicule autour d'un axe formé par des paliers de bras oscillant (2, 3) et prend appui de manière articulée sur le support de roue (4), par l'intermédiaire de paliers, une jambe de force à ressort et/ou une jambe de force d'amortisseur étant fixée sur le support de roue (4), caractérisée en ce que le bras oscillant de guidage de roue (1) s'articule sur le support de roue (4) par des organes en pont (5, 6), qui avec le support de roue (4) et le bras oscillant de guidage de roue (1) forment des quadrilataires d'accouplement et qui sont inclinés en formant entre eux un angle (α) par rapport à un plan médian longitudinal de roue (X-X) vertical et en ce que les plans longitudinaux (Z-Z), (Y-Y), passant par les organes en pont (5, 6), se coupent à peu près dans le plan médian longitudinal (X-X) vertical et environ à hauteur de la surface d'appui de la roue (18).

2. Suspension de roue selon la revendication 1, caractérisée en ce que les organes en pont (5, 6) comprennent deux bras oscillants intermédiaires (7, 8 et 9, 10) s'étendant à peu près verticalement des deux côtés d'un axe de rotation (11), qui d'une part sont maintenus dans des paliers (12, 13 et 14, 15) de manière à pouvoir pivoter sur le support de roue (4) autour d'axes (16, 17) et qui d'autre part sont reliés au bras oscillant de guidage de roue (1), par des axes (18 et 19) s'étendant dans la direction longitudinale du vehicule.

3. Suspension de roue selon les revendications 1 ou 2, caractérisée en ce que les organes en pont (5, 6) sont placés des deux côtés du plan médian longitudinal (X-X) vertical de la roue.

4. Suspension de roue selon une ou plusieurs des revendications précédentes, caractérisée en ce que les axes de pivotement (16, 17) des organes en pont (5, 6) sont prévus sur le support de roue (4) et dans le bras oscillant de guidage de roue (1), dans des plans parallèles au plan median longitudinal (X-X) vertical.

5. Suspension de roue selon une ou plusieurs des revendications précédentes, caractérisée en ce que les leviers intermédiaires (7, 8 et 9, 10) des deux organes en pont (5, 6) sont parallèles entre eux dans le plan longitudinal (Z-Z) et (Y-Y).

6. Suspension de roue selon une ou plusieurs des revendications précédentes, caractérisée en ce que les organes en pont (5, 6) sont inclinés en formant un angle (β) aigu par rapport à un plan médian transversal (V-V) vertical de la roue et en ce que les axes de pivotement (16, 17) sur le support de roue (4) et les axes de pivotement (18, 19) sur le bras oscillant de guidage de roue (1) s'étendent obliquement dans le sens de la marche (F), sous un angle (δ).
